Europäisches Patentamt

European Patent Office

Office européen des brevets

(19)

(11) Veröffentlichungsnummer : **0 337 110 B1**

(12) # EUROPÄISCHE PATENTSCHRIFT

(45) Veröffentlichungstag der Patentschrift :
**05.08.92 Patentblatt 92/32**

(51) Int. Cl.$^5$ : **E03F 5/06, E02D 29/14**

(21) Anmeldenummer : **89104070.1**

(22) Anmeldetag : **08.03.89**

(54) **Bodenwasserablauf.**

(30) Priorität : **15.04.88 CH 1407/88**

(43) Veröffentlichungstag der Anmeldung :
**18.10.89 Patentblatt 89/42**

(45) Bekanntmachung des Hinweises auf die
Patenterteilung :
**05.08.92 Patentblatt 92/32**

(84) Benannte Vertragsstaaten :
**AT BE CH DE ES FR GB IT LI NL SE**

(56) Entgegenhaltungen :
**EP-A- 0 023 380**
**EP-A- 0 085 306**
**FR-A- 2 384 904**
**GB-A- 2 188 664**
**US-A- 2 305 955**
**US-A- 4 454 039**

(73) Patentinhaber : **VON ROLL AG**
**CH-4563 Gerlafingen (CH)**

(72) Erfinder : **Spiess, Hansruedi**
**Pervenches 31**
**CH-2800 Delémont (CH)**
Erfinder : **Galvanetto, François**
**Le Lomont 7**
**CH-2942 Alle (CH)**

(74) Vertreter : **EGLI-EUROPEAN PATENT**
**ATTORNEYS**
**Horneggstrasse 4**
**CH-8008 Zürich (CH)**

## Beschreibung

Die Erfindung betrifft einen Bodenwasserablauf zum Abdecken einer Bodenöffnung gemäss dem Oberbegriff des Anspruchs 1.

Aus der GB-A-2 188 664 ist ein gattungsgemässer Bodenwasserablauf bekannt mit einem rechteckigen Rost welcher aus mehreren Teilgittern besteht, die durch im wesentlichen quer zur Längsrichtung verlaufende Stäbe verbunden sind. Dieses Gitter kann durch elastische Verbiegung der Stäbe in Längsrichtung komprimiert und in einen Rahmen eingesetzt werden, wobei Verriegelungsfortsätze an den Breitseiten des Rosts in entsprechende Ausnehmungen im Rahmen eingreifen und denselben verriegeln.

Aus der EP-A-0 023 380 ist ein ähnlich funktionierender Rost bekannt, der aus Querstäben und jeweils zwei benachbarte Querstäbe verbindenden Längsverbindungen besteht, die abwechselnd an der einen und ander anderen Längsseite angeordnet sind, sodass der Rost eine in Längsrichtung kompressible Serpentinenstruktur bildet.

Bei beiden Rosten genügt eine an einem Ende angreifende Kraft mit einer in Längsrichtung wirkenden Komponente zur Lösung der Verriegelung. Eine solche Kraft kann aber z. B. durch eine einziges bremsendes oder beschleunigendes Fahrzeug auf den Rost ausgeübt werden. Damit besteht ein recht hohes Risiko, dass der Rost unbeabsichtigt aus dem Rahmen entfernt wird, wodurch leicht Unfälle verursacht werden können.

Hier soll die Erfindung Abhilfe schaffen. Die Erfindung, wie sie in den Ansprüchen gekennzeichnet ist, schafft eine Abdeckung, deren Rost weder in Längs- noch in Querrichtung elastisch komprimierbar ist, sondern sich nur unter Torsionsbelastung verbiegt, was ein unbeabsichtigtes Entriegeln sehr viel unwahrscheinlicher macht. Der Rost ist nur an den Enden entriegelbar, sodass an beiden Enden zugleich eine in Entriegelungsrichtung wirkende Kraft ansetzen muss, soll die Verbindung zum Rahmen gelöst werden. Dass ein solcher Fall unbeabsichtigt eintritt, ist jedoch nahezu unmöglich, sodass die Gefahr, dass der Rost etwa durch bremsende Fahrzeuge aus dem Rahmen gerissen wird, ausserordentlich gering ist. Der erfindungsgemässe Bodenwasserablauf genügt also sehr hohen Sicherheitsanforderungen.

Die Erfindung ist in der Zeichnung in mehreren Anwendungsbeispielen dargestellt und nachfolgend beschrieben. Es zeigen:

Fig. 1 einen Rost für einen rechteckigen Rahmen mit einem Mittenstab und mit diesem verbundene Querstäbe in räumlicher Darstellung,

Fig. 2 einen Rahmen zur formschlüssigen Befestigung des Rostes nach Fig. 1 in räumlicher Darstellung,

Fig. 3 eine Variante des Rostes nach Fig. 1,

Fig. 4 einen zum Einsetzen des Rostes nach Fig. 3 passenden Rahmen in räumlicher Darstellung,

Fig. 5 eine Teilansicht eines Rahmens mit einer gezahnten Auflage für den Rost in räumlicher Darstellung,

Fig. 6 eine Teilansicht eines Rahmens mit einer sich bis zum oberen Rand des Rahmens erstreckenden Verzahnung,

Fig. 7 eine weitere Variante eines Rostes, wobei

Fig. 8 einen Schnitt längs der Linie VIII - VIII in Fig. 7,

Fig. 9 eine Ansicht des Rostes aus Richtung IX und

Fig. 10 einen Querschnitt längs der Linie X - X zeigt,

Fig. 11 eine Draufsicht eines Rahmens für den Rost nach Fig. 7, wobei

Fig. 12 einen Schnitt längs der Linie XII - XII,

Fig. 13 eine Ansicht aus Richtung XIII und

Fig. 14 einen Schnitt längs der Linie XIV - XIV zeigt,

Fig. 15 einen Rost mit kreisförmiger Querschnittsfläche, wobei

Fig. 16 einen Schnitt längs der Linie XVI - XVI und

Fig. 17 einen Schnitt längs der Linie XVII - XVII zeigt,

Fig. 18 eine weitere Ausführungsform eines Rostes in Form einer Kreisfläche,

Fig. 21 - 23 weitere Varianten eines Rostes mit teilweise unterteiltem Mittenstab,

Fig. 24 einen Querschnitt eines Bodenwassererablaufes, der sich aus einem Rost nach Fig. 7- 10 und einem Rahmen nach Fig. 11 - 14 zusammensetzt, wobei am Rost die Schluckfähigkeit vergrössernde Mittel vorgesehen sind,

Fig. 25 eine Draufsicht des Rostes nach Fig. 24 und

Fig. 26 einen Bodenwasserablauf ähnlich demjenigen nach Fig. 24, mit über die Querstäbe angeordnete die Schluckfähigkeit vergrössernden Mitteln.

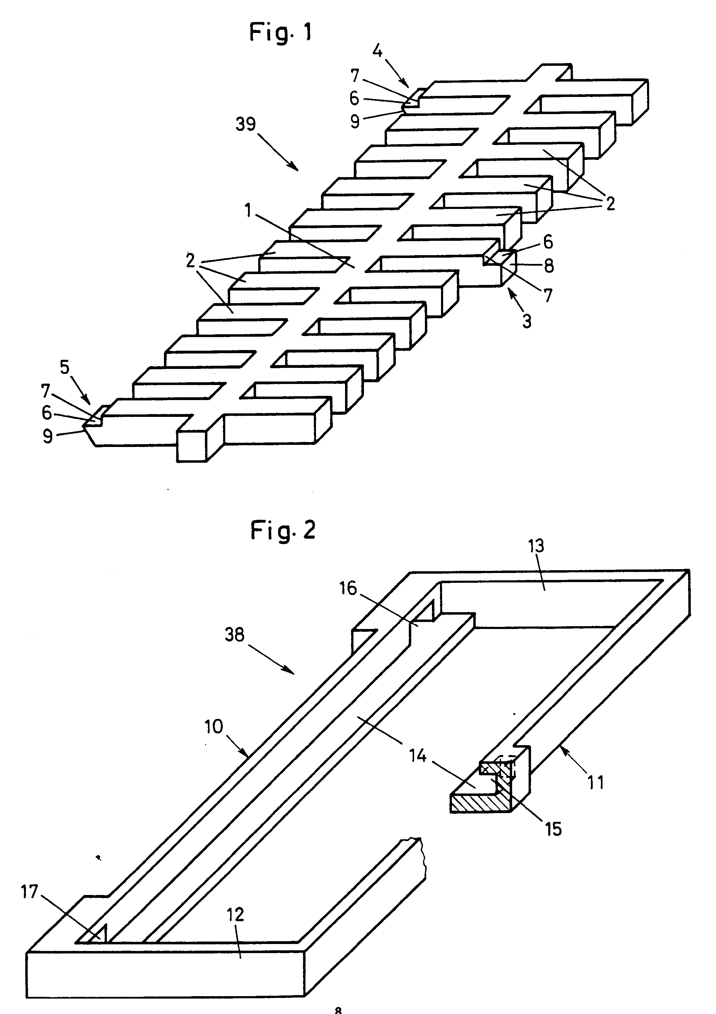

Der in Fig. 1 dargestellte Rost ist für einen rechteckförmigen Rahmen vorgesehen und weist einen in der mitte des Rostes angeordneten Mittenstab 1 auf. Der Mittenstab 1 weist auf beiden Seiten mit Abstand angeordnete Querstäbe 2 auf, die als verhältnismässig starre Stäbe ausgebildet sind. An dem Rost sind an drei Querstäben an deren freien Ende vostehende Partien 3, 4, 5 angeformt. Hierbei ist die vorstehende Partie 3 auf der einen Seite des Mittenstabes 1 und die vorstehenden Partien 4, 5 auf der andern Seite des Mittenstabes angeordnet. Zudem ist die vorstehende Partie 3 an einem Querstab in der Mitte des Rostes und die vorstehenden Partien 4, 5 an den Querstäben am Rand des Rostes vorgesehen.

Die vorstehende Partie 3 weist eine tiefergesetzte Haltefläche 6 auf, die durch eine senkrechte Wand 7 begrenzt ist. Zudem weist die vorstehende Partie 3 eine senkrechte Endfläche 8 auf.

Die beiden vorstehenden Partien 4, 5 weisen ebenfalls die Haltefläche 6 und die Wand 7 auf, jedoch ist die Endfläche als Schrägfläche 9 ausgebildet. Umgekehrt können diese Partien 4, 5 eine senkrechte Endfläche 8 aufweisen, während die gegenüberliegende Partie 3 als Endfläche eine Schrägfläche 9 erhält.

Der Rost nach Fig. 1 kann in einen Rahmen gemäss Fig. 2 eingesetzt werden. Der Rahmen setzt sich aus zwei Rahmenlängsteilen 10, 11 und aus zwei Rahmenquerteilen 12, 13 zusammen. Die Rahmenlängsteile 10, 11 weisen einen Auflageflansch 14 zur Lagerung des Rostes nach Fig. 1 auf. Weiter weisen die Rahmenlängsteile 10, 11 als Haltepartien 15, 16, 17 ausgebildete Hohlräume auf, wobei im Rahmenlängsteil 11 in dessen Mitte der Hohlraum 15 und im Rahmenlängsteil 10 an deren Enden die Hohlräume 16, 17 angeordnet sind. Zum Einsetzen des Rostes wird dieser zunächst mit der vorstehenden Partie 3 in den Hohlraum 15 eingesetzt. Hierbei liegen die vorstehenden Partien 4, 5 auf der gegenüberliegenden Seite auf dem Rahmenlängsteil 10 auf. Nun wird der Rost an dieser Seite niedergedrückt, wobei der an den Schrägflächen 9 der vorstehenden Partien 4, 5 gleitet. Gleichzeitig wird jedoch der Mittenstab 1 an den Enden elastisch gebogen, so dass die vorstehenden Partien 4, 5 in die Hohlräume 16, 17 einrasten können. Damit ist die formschlüssige Halterung des Rostes im Rahmen erreicht.

Das Einsetzen des Rahmens kann auch umgekehrt d.h. zuerst mit den Partien 4, 5 mit Endflächen 8 erfolgen, während anschliessend die Partie 3 mit Schrägfläche 9 unter elastischer Verformung des Mittenstabes 1 in der Mitte eingerastet wird.

Der Rost nach Fig. 1 ist als Ganzes verhältnismässig starr ausgebildet. Einzig der Mittenstab 1 lässt sich soweit elastisch deformieren, dass die vorstehenden Partien 4, 5 bzw. 3 in die Hohlräume 16, 17 einrasten können. Auch der über diesen Rost rollende Verkehr ist nicht in der Lage, den Rost soweit zu verformen, dass er als gespannte Feder aus dem Rahmen springen könnte.

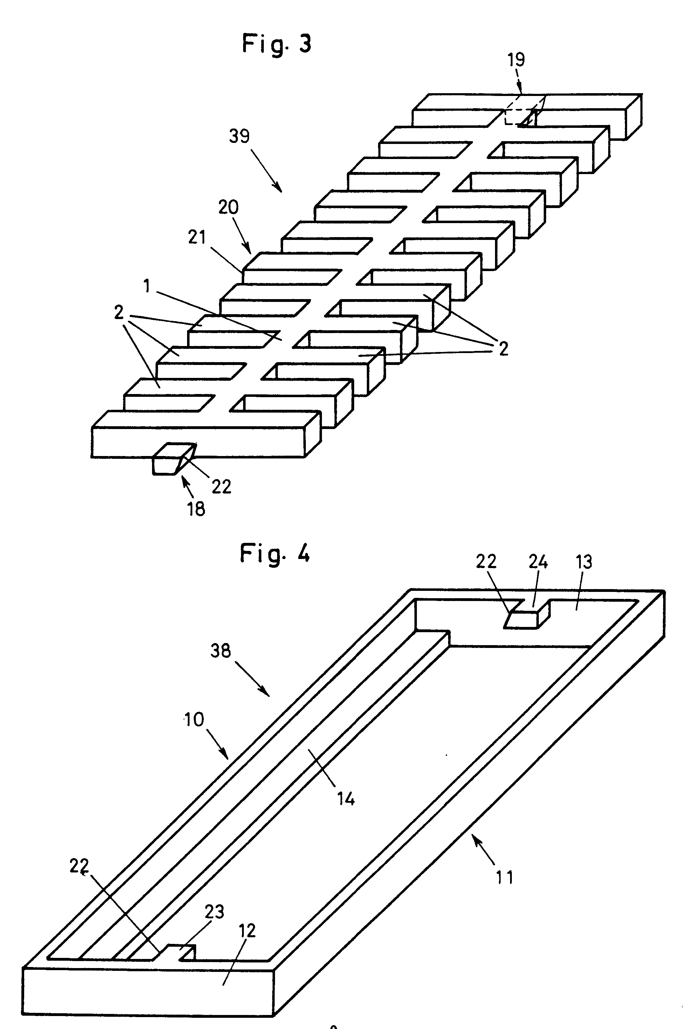

In Fig. 3 und 4 ist eine Variante des Bodenwasserablaufes nach Fig. 1 und 2 dargestellt. Der Mittenstab 1 des Rostes weist an seinen Enden vorstehende Partien 18, 19 auf. Eine dritte vorstehende Partie 20 ist an einem in der Mitte des Rostes liegenden Querstab 2 vorgesehen, jedoch ist diese vorstehende Partie 20 nichts anderes als eine Verlängerung des betreffenden Querstabe 2 mit einer ebenen, senkrechten Endfläche 21. Die beiden vorstehenden Partien 18, 19 weisen zudem eine Schrägfläche 22 auf, die das Einsetzen des Rostes in den Rahmen nach Fig. 4 erleichtert.

Der zum Einsetzen des Rostes nach Fig. 3 geeignete Rahmen ist in Fig. 4 dargestellt. Er weist auf der Innenseite der Rahmenquerteile 12, 13 und Haltepartien 23, 24 auf, die mit den vorstehenden Partien 18, 19 des Rahmens nach Fig. 3 zusammenzuwirken bestimmt sind. Die Rahmenlängsteile 10, 11 des Rahmens nach Fig. 4 weisen ebenfalls je einen Aulageflansch 14 auf, auf welchem der Rost abgestützt ist.

Zum Einsetzen des Rostes nach Fig. 3 in den Rahmen wird der Rost mit derjenigen Seite, auf welcher sich die vorstehende Partie 20 befindet, eingelegt. Nun wird der Rahmen niedergedrückt, wodurch sich die vorstehenden Partien 18, 19 unter Biegen des Mittenstabes 1 an den Haltepartien 23, 24, die ebenfalls Schrägflächen 22 aufweisen, vorbeibewegen. Ist der Rahmen vollständig niedergedrückt, so dass die Querstäbe 2 auf den Auflageflanschen 14 gelagert sind, federt der Mittenstab 1 zurück, wodurch die vorstehenden Partien 18, 19 unter den Haltepartien 23, 24 zu liegen kommen. Da gleichzeitig der Querstab 2 mit der vorspringenden Partie 20 an der Innenwand des Rahmenlängsteils 10 abstützt ist, ist der Rost im Rahmen fixiert und mit einer formschlüssigen Halterung gehalten.

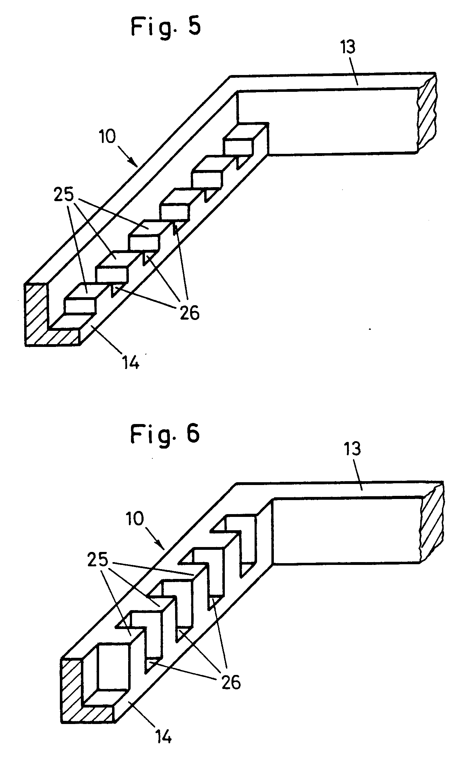

In Fig. 5 und 6 ist je ein Teil eines Rahmens dargestellt, wobei ein Teil des Rahmenlängsteils 10 und ein Teil des Rahmenquerteils 13 sichtbar ist. Der Rahmenlängsteil 10 ist mit dem Auflageflansch 14 versehen, der in Fig. 5 auf seiner Oberseite mit einer Verzahnung versehen ist, die aus quaderförmigen Zinnen 25 besteht, zwischen denen eine rechteckige Rinne 26 verläuft. Die Rinnen 26 weisen eine der Breite des Querstabes entsprechende Breite auf, so dass sich die Querstäbe 2 zwischen die Zinnen 25 in die Rinnen 26 legen können und dadurch zusätzlich gehalten sind. Der in den Rahmen eingesetzte Rost erhält dadurch eine zusätzliche Steifigkeit, welche ihn gegenüber dem rollenden Verkehr unempfindlich macht.

Der Unterschied der Verzahnung nach Fig. 6 gegenüber derjenigen nach Fig. 5 besteht darin, dass die Zinnen 26 sich bis zum oberen Rand des Rahmens erstrecken. d.h., dass die in den Rinnen 26 liegenden Querstäbe 2 vollständig auf zwei Seiten von den Zinnen 25 umgeben sind.

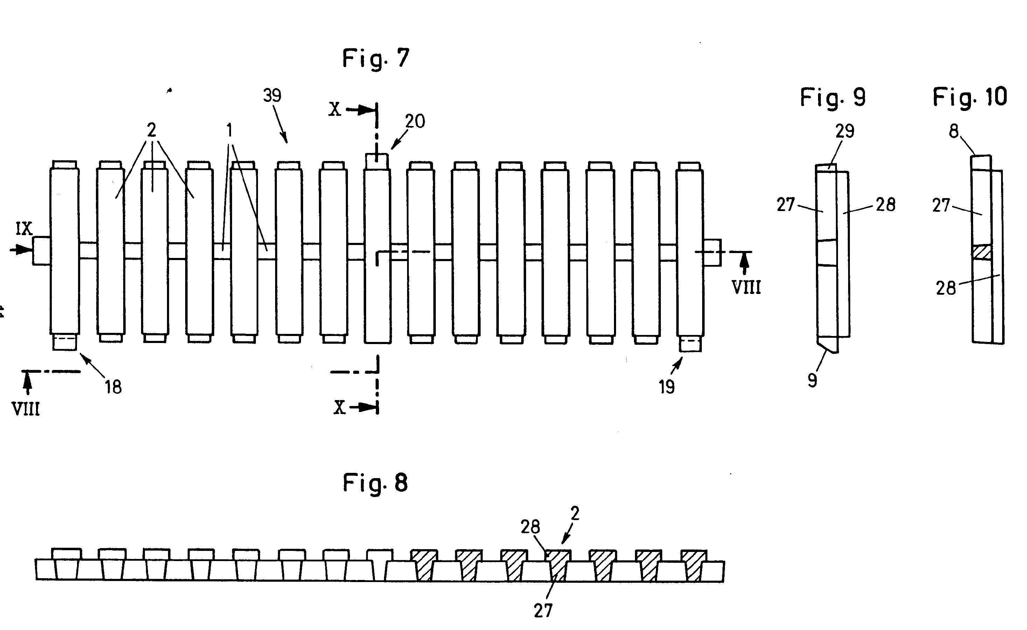

In Fig. 7 - 10 ist ein weiterer Rost dargestellt, welcher sich aus einem Mittenstab 1 und an diese quer dazu angeordnete Querstäbe 2 zusammensetzt. Die beiden äussern Querstäbe 2 und der mittlere Querstab 2 weisen entgegengesetzt angeordnete vorstehende Partien 18, 19, 20 auf. Wie aus Fig. 9 und 10 erkennbar ist, weisen die vorstehenden Partien 18, 19 Schrägflächen 9 auf, während die vorstehende Partie 20 eine senkrechte Endfläche 8 aufweist. Die Anordnung der Schrägflächen 9 kann auch umgekehrt sein.

Aus Fig. 8 ist der Querschnitt der Querstäbe 2 ersichtlich. Dieser Querschnitt ist T-förmig ausgebildet und weist einen Steg 27 und einen Schenkel 28 auf. Wie aus Fig. 7 erkennbar ist, ragen die Stege 27 der Querstäbe 2 mit einer Randpartie 29 über die Schenkel 28 hinaus.

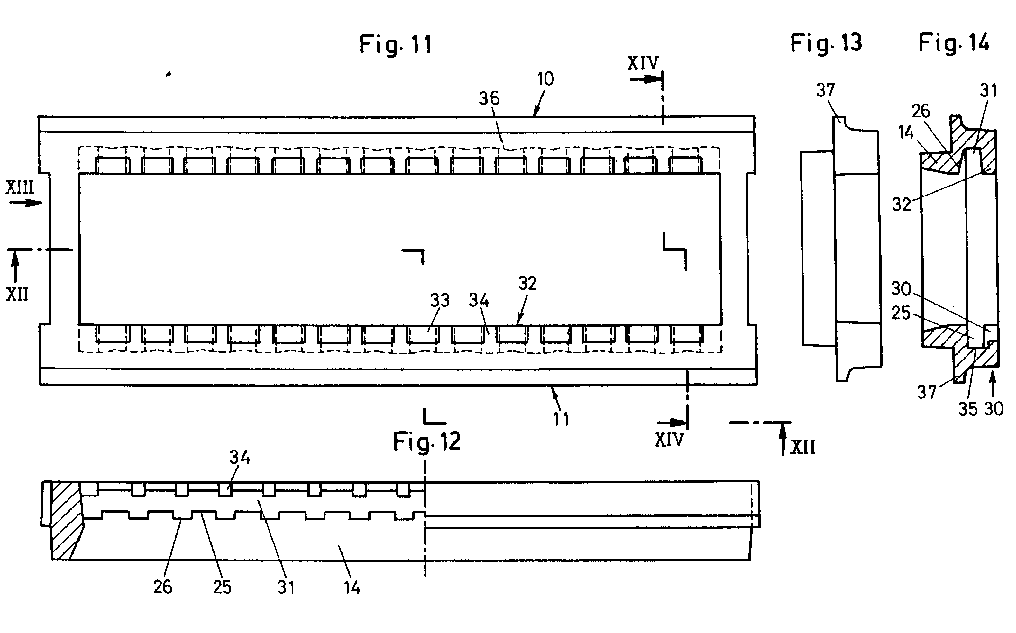

Der mit dem Rost nach Fig. 7 - 10 zusammenzubauende Rahmen ist in Fig. 11 - 14 dargestellt. Wie aus Fig. 14 ersichtlich ist, setzen sich die Rahmenlängsteile 10, 11 aus einem Auflageflansch 14 und einem Oberteil 30 zusammen. Zwischen dem Oberteil 30 und dem Auflageflansch 14 ist ein Kanal 31 gebildet, dessen Form aus der linken Hälfte von Fig. 12 erkennbar ist. Aus Fig. 12 ist weiter ersichtlich, dass der Auflageflansch 14 Zinnen 25 und Rinnen 26 aufweist. Auf den Zinnen 25 stützen sich die Querstäbe 2 ab, während die Rinnen 26 gegen die Rahmenmitte geneigt sind, damit Verunreinigungen leichter entfernt werden können.

Der Oberteil 30 des Rahmenlängsteils 10, 11 ragt mit einem Flansch 32 über den Kanal 31. Der Flansch 32 weist Ausnehmungen 33 auf, in welche die Enden der Querstäbe 2 ragen und dort durch den Schenkel 28 geführt sind. Die Ausnehmungen 33 sind durch einen Vorsprung 34 getrennt, an dessen Flanken die Schenkel 28 der Querstäbe 2 geführt sind.

Die Rückwand 35 des Kanals 31 weist schräge Partien 36 auf, die das Entfernen von Verunreinigungen beim Einsetzen des Rostes erleichtern. Aus Fig. 13 und 14 ist ersichtlich, dass der Oberteil 30 der Rahmenlängsteile 10, 11 einen Aussenflansch 37 aufweist, welcher der Verankerung des Rahmens im Boden dient.

Das Einsetzen des Rostes in den Rahmen erfolgt in gleicher Weise, wie dies für die vorstehend beschriebenen Ausführungen der Fall ist. Zuerst wird die Rahmenseite mit der vorstehenden Partie 20 eingesetzt und anschliessend der Rost niedergedrückt, so dass die Schrägflächen 9 der vorstehenden Partien 18, 19 unter gleichzeitigem Verbiegen des Mittenstabes 1 abwärts gleiten, bis die vorstehenden Partien 18, 19 in den Kanal 31 einrasten. Ist die Schrägfläche 9 an der Partie 20 angeordnet, erfolgt das Einsetzen ebenfalls umgekehrt. Weisen alle vorstehenden Partien Schrägflächen 9 auf, kann der Rost beliebig eingesetzt werden. Dies gilt auch für den Rost nach Fig. 1

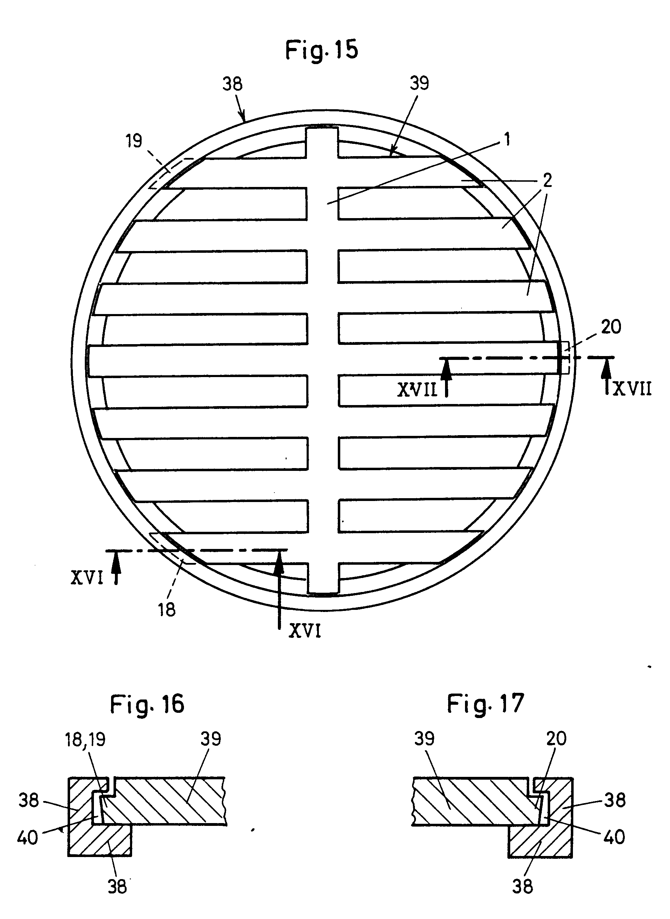

In Fig. 15 - 17 ist ein kreisförmiger Rost 39 dargestellt, der in einem kreisförmigen Rahmen 38 eingesetzt ist. Der Rost 39 setzt sich wie die bereits beschriebenen Roste aus einem Mittenstab 1 und daran angeordneten Querstäben 2 zusammen. Die beiden äusseren Querstäbe 2 sind mit vorstehenden Partien 18, 19 versehen, während auf der entgegengesetzten Seite der Querstab 2 mit der vorstehenden Partie 20 versehen ist. Die vorstehenden Partien 18, 19, 20 ragen in Ausnehmungen 40 des Rahmens 38, siehe Fig. 16 und 17. Die vorstehenden Partien 18, 19, 20 sind in gleicher Weise ausgebildet wie diejenigen in Fig. 1 und Fig. 7.

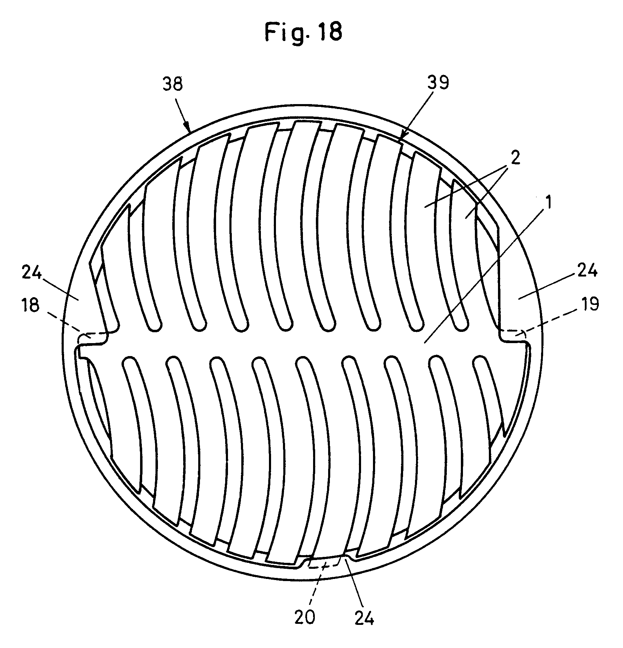

In Fig. 18 ist ein weiterer kreisförmigen Bodenwasserablauf dargestellt, bei welchem am Mittenstab 1 gebogene Querstäbe 2 angeordnet sind. Die Befestigung des Rostes 39 im Rahmen 38 erfolgt über vorstehende Partien, die in Haltepartien 23, 24 des Rahmens 38 einrasten. Das Einsetzen des Rostes 39 in den Rahmen 38 erfolgt in gleicher Weise wie bei den rechteckigen Rosten, d.h. es wird zuerst die vorstehende Partie 20 in die Haltepartie 24 eingesetzt und anschliessend der Rost 39 niedergedrückt, bis die vorstehenden Partien 18, 19 unter Verbiegen des Mittenstabes 1 an des Haltepartien 23 entlanggleiten, bis sie in diese einrasten können.

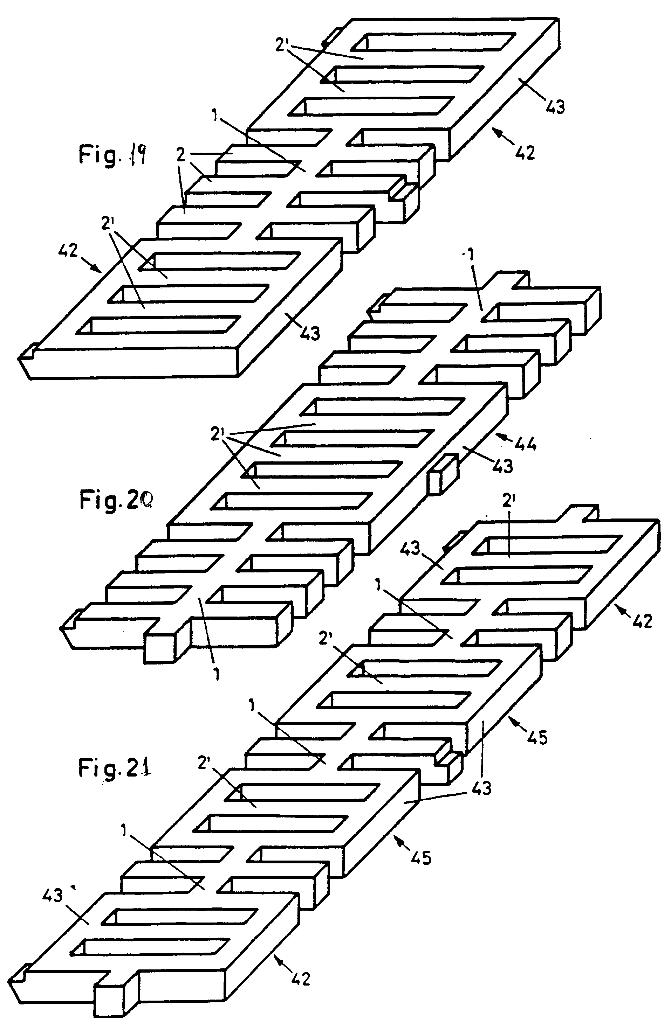

Soll eine etwas verkleinerte Deformationsmöglichkeit erreicht werden, kann dies dadurch erreicht werden, dass nur Teile des Mittenstabes beibehalten werden, siehe Fig. 21 - 23.

In Fig. 21 erstreckt sich der Mittenstab 1 nur über etwa einen Drittel der gesamten Rostlänge und nur in diesem Bereich sind die Querstäbe 2 mit freien Enden ausgebildet. Die beiden Endpartien 42 des Rostes sind dagegen als verhältnismässig starre Rahmen ausgebildet, bei denen die Querstäbe 2′ durch Rahmenstäbe 43 miteinander verbunden sind.

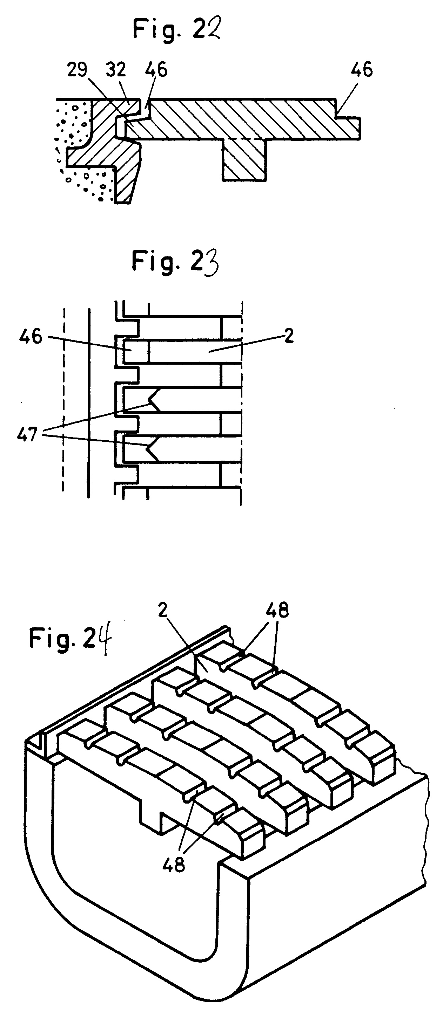

In Fig. 22 erstreckt sich der Mittenstab 1 über die beiden Endpartien, während die mittlere Rostpartie 44 als verhältnismässig starrer Rahmen mit die Querstäbe 2′ verbindenden Rahmenstäben 43 ausgebildet ist.

Der Rost nach Fig. 23 weist drei mit dem Mittenstab 1 versehene Rostpartien auf, zwischen denen Zwishenrostpartien 45 mit die Roststäbe 2′ verbindenden Rahmenstäben 43 angeordnet sind. An den Rostenden sind Endpartien 42 mit die Querstäbe 2′ verbindenden Rahmenstäben 43 angeordnet.

In den Ausführungsformen des Rostes nach Fig. 21 - 23 stellen die Endpartien 42, die mittlere Rostpartie 44 und die Zwischenrostpartie 45 verhältnismässig steife Rostteile dar. Die gesamte Deformationsmöglichkeit des Rostes kann durch entsprechende Anordnung der Partien 42, 44 und 45 beeinflusst werden. Die beschrie-bene Bodenwasserabläufe weisen den Vorteil auf, dass der Rost 39 verhältnismässig starr ausgebildet werden kann und nur durch Biegung des Mittenstabe 1 zum Einsetzen des Rostes in den Rahmen verformt werden kann. Anstelle eines einzigen Mittenstabes 1 ist es auch möglich, bei grösseren Bodenwasserabläufen zwei oder mehr Mittenstäbe vorzusehen. Die Stärke dieser Mittenstäbe 1 muss lediglich so dimensioniert werden, dass beim Einsetzen des Rahmens ein Verbiegen der Mittenstäbe möglich ist. Zum Einsetzen und Entfernen des Rostes 39 kann ein geeignetes Werkzeug verwendet werden, damit der Mittenstab bzw. die Mittenstäbe verformt werden können. Ist der Rost 39 im Rahmen 38 eingesetzt, ist er formschlüssig gehalten. Er kann auch etwas vorgespannt werden, damit der Rost beim Ueberrollen nicht klappert.

Die beschriebene Bodenwasserabläufe könne in ihrer Schluckfähigkeit mit verhältnismässig einfachen Mitteln verbessert werden, wie dies in Fig. 24 - 26 dargestellt ist.

In Fig. 24 und 25 is ein Bodenwasserablauf mit einem Rost nach Fig. 7 - 10 und einem Rahmen nach Fig. 11 - 14 teilweise dargestellt. An den Enden der Querstäbe 2 wird die Randpartie 29 durch eine Ausnehmung 46 vergrössert, so dass zwischen dem Flansch 32 des rahmens und den Questäben durch die Ausnehmung 46 ein Spalt entsteht, durch den ein Teil des dem Bodenwasserablauf zuflizssenden FFlüssigkeit ablaufen kann. Die Schluckfähigkeit kann noch weiter verbessert werden, wenn, siehe Fig. 25, die Aufnehmung 46 mit einer Keilpartie 47 ausgeführt wird. Diese, die Schluckfähigkeit vergrössernden Partien gemäss Fig. 24 and 25 können bereits beim Modell vorgesehen werden, da sie zu keiner Mehrarbeit Anlass geben.

In Fig. 26 ist eine andere Lösung zur Vergrösserung der Schluckfähgikeit eines Rostes gemäss Fig. 7 dargestellt. bei diesem ist die sichtbare Oberfläche der Querstäbe 2 leicht konvex gewölbt, so dass das Niveau dieser Oberfläche im Mittenbereich des Rostes höher liegt als an den Rändern. Die Oberfläche wird mit einer Anzahl Querrillen 48 versehen, die einen Abfluss für die auf die Querstäbe fliessende Flüssigkeit bilden. Zwischen den Querrillen 48 ist die Oberfläche entsprechend der konvexen Form der Querstäbe leicht geneigt, so dass der Flüssigkeitszufluss gegen die Mitte des Rostes gehemmt wird.

Es ist möglich, die in Fig. 24 und 25 beschriebenen Massnahmen zur Verbesserung der Schluckfähigkeit des Rostes mit den Massnahmen nach Fig. 26 zu kombinieren.

Als Material für die beschriebenen Bodenwasserabläufe eignet sich beispielsweise ein Gusseisen mit Kugelgraphit oder ein Kunststoff. Der Rahmen 38 und der Rost 39 werden zweckmässig gegossen und vorzugsweise ohne weitere Bearbeitung zusammengebaut.

## Patentansprüche

1. Bodenwasserablauf zum bedecken einer Bodenöffnung, welcher aus einem im Boden verlegten Rahmen (38) und aus einem auf einer Auflage (14) des Rahmens abgestützten Rost (39) zusammengesetzt ist, welch letzterer aus einem Material mit hoher Elastizität hergestellt und unter Ausnützung dieser Elastizität in dem Rahmen (38) einsetzbar ist, in welchem der Rost (39) mit einer formschlüssigen Halterung gehalten ist, **dadurch gekennzeichnet, dass** der Rost (39) des Bodenwasserablaufs sich aus einem durchgehenden Mittenstab (1), der sich über die Bodenöffnung erstreckt sowie quer an demselben angeordneten Querstäben (2) oder aus aufeinanderfolgenden Mittenstäben (1) und steifen Rostpartien (42, 44, 45) zusammensetzt, wobei an gegenüberliegenden Enden des Rostes (39) vorstehende Partien (4, 5, 18, 19) vorgesehen sind, welche unter elastischer Verformung des Mittenstabes (1) bzw. der Mittenstäbe (1) allein in entsprechende Haltepartien (16, 17) im Rahmen (38) unter Bildung einer formschlüssigen Verriegelung einrastbar sind, während ein zwischen den genannten Enden angeordneter Querstab (2) oder eine Rostpartie (44) eine weitere vorstehende Partie (3, 20) aufweist, welche in eine entsprechende Haltepartie (15) im Rahmen (38) eingreift.

2. Bodenwasserablauf nach Anspruch 1, **dadurch gekennzeichnet, dass** die unter elastischer Deformation des Mittenstabes (1) bzw. der Mittenstäbe (1) allein in entsprechenden Haltepartien (16, 17) einrastbaren vorstehenden Partien (4, 5) an zur gleichen Rahmenseite weisenden Enden zweier an den Enden des Rostes (39) angebrachter Querstäbe (2) oder Rostpartien (42) angeordnet sind.

3. Bodenwasserablauf nach Anspruch 1, dadurch gekennzeichnet, dass von drei Stäben mit vorstehenden Partien (18, 19, 20) zwei vorstehende Partien (18, 19) an den Enden des Rostes (39) angeordnet sind und mit am Rahmen (38) vorgesehenen Vorsprüngen (23, 24) zur Bildung eines Formschlusses zusammenwirken, während die dritte vorstehende Partie ( 20) etwa in der Mitte zwischen den zwei vorstehenden Partien an einem Querstab (2) angeordnet ist, wobei diese vorspringende Partie (20) sich am Rahmen (38) abstützt.

4. Bodenwasserablauf nach einem der Ansprüche 1 bis 3, dadurch gekennzeichnet, dass die Auflage (14) des Rahmens (38) für die Querstäbe (2) mit einer Verzahnung aus Zinnen (25) und Rinnen (26) versehen ist, wobei die zwischen den Querstäben des Rostes liegenden Zinnen seitlich an den Querstäben anliegen und ihre Lage fixieren.

5. Bodenwasserablauf nach Anspruch 4, dadurch gekennzeichnet, dass die Zinnen (25) sich bis zum oberen Rand des Rahmens (38) erstrecken.

6. Bodenwasserablauf nach Anspruch 4, dadurch gekennzeichnet, dass die Querstäbe (2) auf den Zinnen (25) der gezahnten Auflage abgestützt sind, über welchen sich ein Kanal (31) erstreckt, der durch einen Flansch (32) überdeckt ist, in welchem Ausnehmungen (33) für die seitliche Fixierung der Querstäbe (2) angeordnet sind.

7. Bodenwasserablauf nach Anspruch 6, dadurch gekennzeichnet, dass der Kanal (31) an seiner Rückwand (35) mit schrägen Partien (36) versehen ist, zwecks Erleichterung der Entfernung von Fremdkörpern aus dem Kanal (31).

8. Bodenwasserablauf nach Anspruch 6 oder 7, dadurch gekennzeichnet, dass die Rinnen (26) der Verzahnung eine nach einwärts und abwärts geneigte Schräge aufweisen, zwecks Erleichterung des Entfernens von Fremdkörpern aus dem Kanal (31).

9. Bodenwasserablauf nach Anspruch 1, dadurch gekennzeichnet, dass von den vorstehenden Partien mindestens diejenigen derselben Rahmenseite eine Schrägfläche (9, 22) aufweisen.

10. Bodenwasserablauf nach Anspruch 1 mit einem kreisförmigen Rahmen (38) und einem kreisflächenförmigen Rost (39), dadurch gekennzeichnet, dass von drei vorstehenden Partien zwei vorstehende Partien (18, 19) an den äussersten Querstäben (2) auf der einen Seite des durchehenden Mittenstabes (1) und die dritte vorstehende Partie am mittleren Querstab auf der gegenüberliegenden Seite des Mittenstabes (1) angeordnet sind, wobei die vorstehenden Partien in Ausnehmungen (40) des Rahmens (38) ragen.

11. Bodenwasserablauf nach einem der Ansprüche 1 bis 10, dadurch gekennzeichnet, dass mindestens ein Teil der vorstehenden Partien (3, 4, 5, 18, 19, 20) eine das Einsetzen des Rostes (39) in den Rahmen erleichternde schräg geneigte Stirnfläche (9) aufweist.

## Claims

1. A floor water-drain, for covering a floor opening, which is composed of a frame (38) laid in the floor and of a grid (39) supported on a support (14) of the frame, the grid being made of a material with high elasticity and able to be inserted into the frame (38), in which the grid (39) is held with a positive-looking hold, by using this elasticity, **characterised in that the** grid (39) of the floor water-drain is composed of a continuous central bar (1), which extends over the floor opening, as well as of cross bars (2) arranged transversely over the same or of consecutive central bars (1), and rigid grid sections (42, 44, 45), sections (4, 5, 18, 19) protruding on opposing ends of the grid (39) being provided which are able to self-lock into corresponding holding sections (16, 17) in the frame (38) by elastic deformation of the central bar (1) or the central bars (1), forming a positive-locking closure, whilst a cross bar (2) or a grid section (44) arranged between the said ends has a further protruding section (3, 20) which engages a corresponding holding section (15) in the frame (38).

2. A floor water drain according to claim 1, **characterised in that the** protruding sections (4, 5) are arranged on ends, pointing to the same frame side, of two cross bars (2) or grid sections (42) attached to ends of the grid (39) and self-lock into corresponding sections (16, 17) with elastic deformation of the central bar (1) or of the central bars (1).

3. A floor water drain according to claim 1, characterised in that, in respect of the three bars with protruding sections (18, 19, 20), two protruding sections (18, 19) are arranged on the ends of the grid (39) and cooperate with projections (23, 24) provided on the frame (38) for forming a positive-locking whilst the third protruding section (20) is arranged approximately in the centre, between the two protruding sections on a cross bar (2), wherein this projecting section (20) is supported on the frame (38).

4. A floor water drain according to one of claims 1 to 3, characterised in that the support (14) of the frame (38) for the cross bars (2) is provided with a toothing of crenellations (25) and troughs (26), the crenellations lying between the cross bars of the grid, resting laterally against the cross bars and fixing their position.

5. A floor water drain according to claim 4, characterised in that the crenellations (25) extend to the upper edge of the frame (38).

6. A floor water drain according to claim 4, characterised in that the cross bars (2) are supported on the crenellations (25) of the toothed support, over which a channel (31) extends which is covered by a flange (32) and in which are arranged recesses (33) for lateral fastening of the cross bars (2).

7. A floor water drain according to claim 6, characterised in that the channel (31) is provided on its rear wall (35) with inclined sections (36), for the purposes of facilitating removal of foreign bodies from the channel (31).

8. A floor water drain according to claim 6 or 7, characterised in that the crenellations (26) of the toothing have an inwardly and downwardly inclined slope, for the purpose of facilitating removal of foreign bodies from the channel (31).

9. A floor water drain according to claim 1, characterised in that at least those protruding sections on the same frame side have an inclined face (9, 22).

10. A floor water drain according to claim 1 with a circular frame (38) and a circular area shaped grid (39), characterised in that two protruding sections (18, 19) of three protruding sections are arranged on the outermost cross bars (2) of one side of the continuous central bar (1) and the third protruding section is arranged on the central cross bar on the opposing side of the central bar (1), the protruding sections projecting into recesses of the frame (38).

11. A floor water drain according to one of claims 1 to 10, characterised in that at least one section of the protruding sections (3, 4, 5, 18, 19, 20) has a transversely inclined front face (9) facilitating the insertion of the grid (39) into the frame.

## Revendications

1. Evacuation d'eau du sol destinée à recouvrir une ouverture pratiquée dans le sol, qui se compose d'un cadre (38) place dans le sol et d'une grille (39) prenant appui sur un support (14) du cadre, cette grille, réalisée dans un matériau présentant une grande élasticité, pouvant être insérée, du fait de cette élasticité, dans le cadre (38) dans lequel la grille (39) est maintenue par concordance de forme, **caractérisée en ce que la** grille (39) de l'evacuation d'eau du sol se compose d'un barreau central (1) continu qui s'étend sur l'ouverture du sol ainsi que de barreaux transversaux (2) perpendiculaires au premier ou de barreaux centraux (1) successifs et de parties de grille (42, 44, 45) rigides, des parties (4, 5, 18, 19) saillantes, prévues à des extrémités opposées de la grille (39), pouvant s'accrocher par déformation élastique du barreau central (1) ou des barreaux centraux (1), dans des parties de maintien (16, 17) correspondantes du cadre (8), en formant un verrouillage par concordance de forme, tandis qu'un barreau transversal (2), place entre les extrémités citées, ou une partie de grille (44) comporte une autre partie saillante (3, 20) qui s'engage dans une partie de maintien (15) correspondante du cadre (38).

2. Evacuation d'eau du sol selon la revendication 1, **caractérisée en ce que les** parties saillantes (4, 5) pouvant s'accrocher par simple déformation élastique du barreau central (1) ou des barreaux centraux (1) dans des parties de maintien (16, 17) correspondantes, sont disposées aux extrémités, tournées vers le même côté du cadre, de deux barreaux transversaux (2) ou parties de grille (42) places aux extrémités de la grille (39).

3. Evacuation d'eau du sol selon la revendication 1, caractérisée en ce que sur trois barreaux avec parties saillantes (18, 19, 20), deux parties saillantes (18, 19) sont prévues aux extrémités de la grille (39) et coopèrent avec des reliefs (23, 24) prévus sur le cadre (38) pour former un assemblage par concordance de forme, tandis que la troisième partie saillante (20) se trouve à peu près au milieu entre les deux parties saillantes sur un barreau transversal (2), cette partie saillante (20) prenant appui contre le cadre (38).

4. Evacuation d'eau du sol selon l'une des revendications 1 à 3, caractérisée en ce que le support (14) du cadre (38) destine aux barreaux transversaux (2) est pourvu d'une denture constituée de dents (25) et de créneaux (26), les dents situées entre les barreaux transversaux de la grille s'appliquant sur le côté des barreaux transversaux et fixant leur position.

5. Evacuation d'eau du sol selon la revendication 4, caractérisée en ce que les dents (25) s'étendent jusqu'au bord supérieur du cadre (38).

6. Evacuation d'eau du sol selon la revendication 4, caractérisée en ce que les barreaux transversaux (2) prennent appui sur les dents (25) du support denté, sur lesquelles s'étend un canal (31) qui est recouvert par une bride (32) dans laquelle sont pratiques des évidements (33) pour la fixation latérale des barreaux transversaux (2).

7. Evacuation d'eau du sol selon la revendication 6, caractérisée en ce que le canal (31) est pourvu sur sa paroi arrière (35) de parties obliques (36), afin de faciliter l'enlèvement de corps étrangers du canal (31).

8. Evacuation d'eau du sol selon la revendication 6 ou 7, caractérisée en ce que les créneaux (26) de la denture présentent des surfaces obliques inclinées vers l'intérieur et vers le bas, afin de faciliter l'enlèvement des corps étrangers du canal (31).

9. Evacuation d'eau du sol selon la revendication 1, caractérisée en ce qu'au moins les parties saillantes qui se trouvent du même côté du cadre présentent une surface oblique (9, 22).

10. Evacuation d'eau du sol selon la revendication 1 comportant un cadre (38) circulaire et une grille (39) en forme de surface circulaire, caractérisée en ce que deux (18, 19) des trois parties saillantes des barreaux transversaux (2) les plus extérieurs se trouvent sur un côté du barreau central (1) continu et la troisième partie saillante du barreau transversal central se trouve sur le côté oppose du barreau central (1), les parties saillantes pénétrant dans des évidements (40) du cadre (38).

11. Evacuation d'eau du sol selon l'une des revendications 1 à 10, caractérisée en ce que certaines au moins des parties saillantes (3, 4, 5, 18, 19, 20) présentent une surface frontale (9) inclinée obliquement, facilitant la mise en place de la grille (39) dans le cadre.

Fig. 1

Fig. 2

## Fig. 3

19

39

20

21

1

2

2

2

22

18

## Fig. 4

22    24    13

38

10

14

11

22

23

12

Fig. 5

Fig. 6

Fig. 10

Fig. 9

Fig. 7

Fig. 8

11

Fig. 11

Fig. 13

Fig. 14

36

10

XIV

XIII

12

XII

33 34 32

11

XIV

XII

Fig. 12

34

26 25 31 14

37

37

26

14

31

32

30

25

37

35 30

EP 0 337 110 B1

## Fig. 15

## Fig. 16

## Fig. 17

## Fig. 18

Fig. 19

Fig. 20

Fig. 21

**Fig. 22**

**Fig. 23**

**Fig. 24**